# NEW EUROPEAN PATENT SPECIFICATION

(11) **EP 1 171 836 B2**
(45) Date of publication and mention of the opposition decision: **21.06.2017**
(45) Mention of the grant of the patent: 26.10.2005
(21) Application number: 99943514.2
(22) Date of filing: 02.09.1999
(51) Int. Cl.: G06F 17/30

(54) **FUNCTION KEY FOR COMPUTER DATA HANDLING**
FUNKTIONSTASTE ZUR COMPUTER-DATABEARBEITUNG
TOUCHE DE FONCTION POUR LE TRAITEMENT DE DONNEES D'ORDINATEUR

(30) Priority: 03.09.1998 NO 984066; 10.11.1998 US 189626
(43) Date of publication of application: 16.01.2002
(73) Proprietor: ARENDI S.A.R.L, 1030 Luxembourg (LU)
(72) Inventor: ATLE, Hedloy, 29016 Malaga (ES)
(74) Representative: Molnia, David
(86) International application number: PCT/NO1999/000273
(87) International publication number: WO 2000/014655

(56) References cited:
- EP-A2- 0 093 250
- EP-A2- 0 093 250
- US-A- 4 674 065
- US-A- 5 267 155
- US-A- 5 392 386
- US-A- 5 761 656
- US-A- 5 761 656
- US-A- 5 774 887
- US-A- 5 794 228
- US-A- 5 794 228
- US-A- 5 946 679
- User Manual of AddressMate Plus
- Apple Data Detectors User's Manual
- "Getting results with Microsoft Office 97", 3 cover pages, pages 72,82,83,90,101,518,697, 1995-1997
- HALL W. ET AL: 'Rethinking Hypermedia', 1996, KLUWER ACADEMIC
- "Microcosm Plus for Windows" A Tutorial; Microcosm Ltd. 1996
- Affidavit of David Lewis BLOCK
- Affidavit of James MILLER
- NARDI B.A. ET AL: 'Collaborative, Programmable Intelligent Agents' COMMUNICATION OF THE ACM vol. 41, no. 3, March 1998, pages 96 - 104
- BONURA T. ET AL: 'Drop Zones: An extention to LiveDoc' SIGCHI BULLETIN vol. 30, no. 2, April 1998, pages 59 - 63
- MILLER J.R. ET AL: 'From Documents to Objects: An overview of LiveDoc' SIGCHI BULLETIN vol. 30, no. 2, April 1998, pages 53 - 58
- Trial Transcript, Arendi vs. Microsoft, September 22, 2004, pages 2, 49-54
- Trial Transcript, Arendi vs. Microsoft September 23, 2004, pages 2, 104, 117, 124, 130
- Expert report of Professor Benjamin Goldberg
- Supplemental expert report of Professor Benjamin Goldberg
- Second supplemental expert report of Professor Benjamin Goldberg
- Expert report of Professor Calvin Gidney III

## Description

The present invention is related to a method for accessing, in a second information source, second information associated with first information in an application program containing user data.

In recent years, with the advent of programs, such as word processors, spreadsheets, etc., hereinafter called "word processors" users may require retrieval of information, such as name and address information, etc., for insertion into a document, such a letter, fax, etc., created with the word processor. Typically, the information is retrieved by the user from an information management source external to the word processor, such as a database program, contact management program, etc., or from the word processor itself, for insertion into the document. Examples of such word processors are Word, Notepad, Excel, Wordpad, WordPerfect, Quatropro, Amipro, etc., and examples of such information management sources are Access, Outlook, Oracle, dBase, rBase, Cardfile, etc.

However, the information in the database must constantly be updated by the user. This requires the user to learn how to use and have access to the database. In this case, a change in the information, such as change in an address or a name, etc., requires the user of the word processor to implement this change in the database, or alternatively, the change is made to the database centrally by a database administrator.

The US 5,761,656 discloses an interface between a computer application and a database, wherein a user invokes the application and another program, called "link manager". The user "drags and drops" objects from an application window to a link manager window to command the link manager to associate parameters of the objects with input and output fields of database operations. Thus, the user has to identify a search string, to initiate search in the database, and to copy and paste data into the application.

The present invention therefore is related to a method, computer program and computer readable medium for providing function item using particularly a touch screen, keyboard button, icon, menu, voice command device, etc. hereinafter called "button", provided in a word processor and coupled to an information management source for providing address handling within a document created by the computer program, thereby providing a method and computer readable medium for address handling within a computer program.

An object of the present invention is to provide a method and computer readable medium for address handling within a word processor.

Another object of the present invention is to provide a method and a computer readable medium for address handling within a word processor using an input device, such as a touch screen, keyboard button, icon, menu, voice command device, etc., provided in the computer program and coupled to an information management source, such as a database program, contact management program, etc.

The above and other objects are achieved according to the present invention by providing a method, computer program, and computer readable medium according to claims 1, 14 and 15, respectively.

A function item such as a key, button, icon, or menu, tied to a user operation in a computer is provided, whereby a single click on the function item in a window or program on a computer screen, or one single selection in a menu in a program, initiates retrieval of name and addresses and/or other person or company related information, while the user works simultaneously in another program, e.g., a word processor. The click on the function item initiates a program connected to the button to search a database or file available on or through the computer, containing the person, company or address related data, in order to look up data corresponding to what the user types, or partly typed, e.g., name and/or adress in the word processor, the correct data from the database, data related to the typed data, e.g. the name of the person, company, or the traditional or electronic address, or other person, or company, or address related data, and alternatively the persons, companies, or addresses, are displayed and possibly entered into the word processor, if such related data exists.

The present invention also includes a computer readable medium storing program instructions by which the method of the invention can be performed when the stored program instructions are appropriately loaded into a computer.

A more complete appreciation of the invention and many of the attendant advantages thereof will be readily obtained as the same becomes better understood by reference to the following detailed description when considered in connection with the accompanying drawings wherein:
figure 1 is a flow chart illustrating a method for address handling within a computer program, according to an exemplary embodiment of the present invention,
figure 2 is a flow chart illustrating a method for address handling within a computer program, according to another exemplary embodiment of the present invention,
figure 3 is a screen shot illustrating the inputting of a name to be searched and an address handling button within a word processor, according to an exemplary embodiment of the present invention,
figure 4 is a screen shot illustrating a retrieved address in a word processor, according to an exemplary embodiment of the present invention,
figure 5 is a screen shot illustrating the inputting of a name and address to be searched and an address handling button within a word processor, according to an exemplary embodiment of the present invention,
figure 6 is a screen shot illustrating an add new contact message window, according to an exemplary embodiment of the present invention,
figure 7 is a screen shot illustrating a contact register message window, according to an exemplary embodiment of the present invention,
figure 8 is a screen shot illustrating an address missing message window, according to an exemplary embodiment of the present invention,
figure 9 is a screen shot illustrating a modify contact's address message window, according to an exemplary embodiment of the present invention,
figure 10 is a screen shot illustrating a select a contact address register message window, according to an exemplary embodiment of the present invention,
figure 11 is a screen shot illustrating a more detailed mode of registering an additional address for the contact register of figure 9, according to an exemplary embodiment of the present invention,
figure 12 is a screen shot illustrating a contact management program window in a full detailed mode, according to an exemplary embodiment of the present invention,
figure 13 is a screen shot illustrating an address already in use message window, according to an exemplary embodiment of the present invention,
figure 14 is a screen shot illustrating the inputting of a name to be searched and an address handling button within a spreadsheet, according .to an exemplary embodiment of the present invention,
figure 15 is a screen shot illustrating a retrieved address in a spreadsheet, according to an exemplary embodiment of the present invention, and
figure 16 is a schematic illustration of a general purpose computer for performing the processes of the present invention, according to an exemplary embodiment of the present invention.

In an embodiment of the present invention, single button addressing is achieved by providing an input device, such as a touch screen, keyboard, icon, menu, voice command device, etc., hereinafter called "button", in a computer program, such as a word processing program, spreadsheet program, etc., hereinafter called "word processor", for executing address handling therein.

Accordingly, in a word processor, the button is added and a user types information, such as an addressee's name, or a part of the name, etc. in a document created with the word processor, such as a letter, fax, etc., and then clicks, selects, commands, etc. the button via the appropriate input device, such as a touch screen button, keyboard button, icon, menu choice, voice command device, etc. A program then executes and retrieves the typed information from the document, and searches an information management source, such as a data base, file, database program, contact management program, etc., hereinafter called "database" to determine if the information, such as the name or part of the name typed and searched by the program exists in the database. If the program does not find stored information, such as a name, corresponding to the name or part of the name typed, the user is asked by the program whether the information, such as the name that was not found, should be added to the database. In addition, the user may enter any other information besides the name, such as addresses, businesses, telephone numbers, fax numbers, e-mail address, etc., so that this other information can be stored in the database for later use.

If the program finds name(s) and address(es) corresponding to the part of the addressee's name typed, this additional information is automatically entered into the user's word processor, optionally with a confirmation from the user that this is the correct data. If the typed address information does not correspond to data already stored in the database, after clicking on the button, the program, for example, lets the user decide (1) if this is new data (e.g., a new address) for an existing contact, (2) if the stored data should be changed to what the user just typed, (3) if this is a new contact with the same name as one already entered into the database, or (4) if the typed address is only to be used once, and therefore not to be stored in the database at all. If, later, for example, a name with several address stored in the database is recalled, all addresses for this contact will be displayed, so that the correct address can be selected by the user.

The program may be extended to also store and retrieve other information, such as telephone numbers, fax numbers, e-mail addresses, etc. Once the program recalls the telephone numbers, fax numbers, e-mail addresses, etc., the user can command the program to send e-mails, faxes, etc. Similarly, if the user types in the name of a mailing list, the program create merge letters, group e-mails, etc.

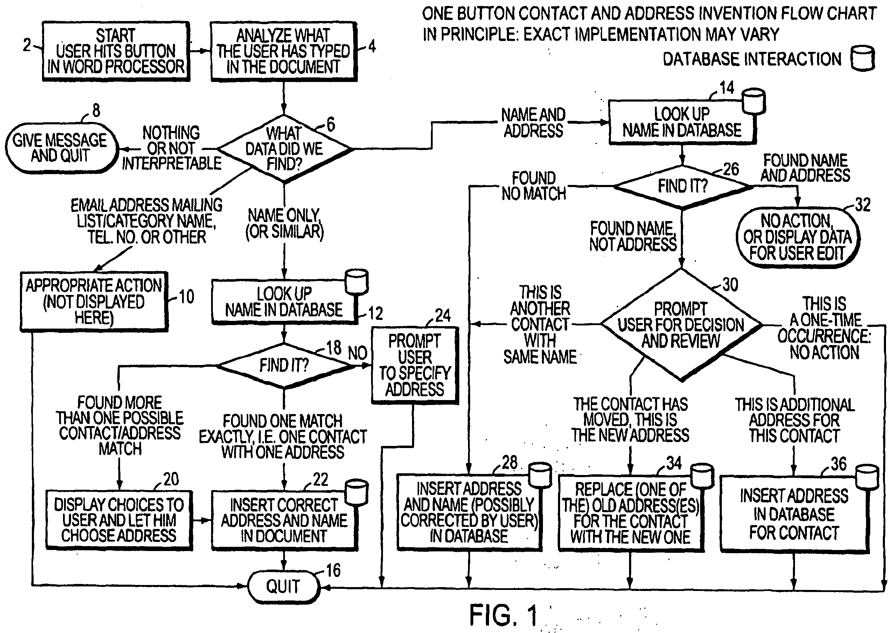

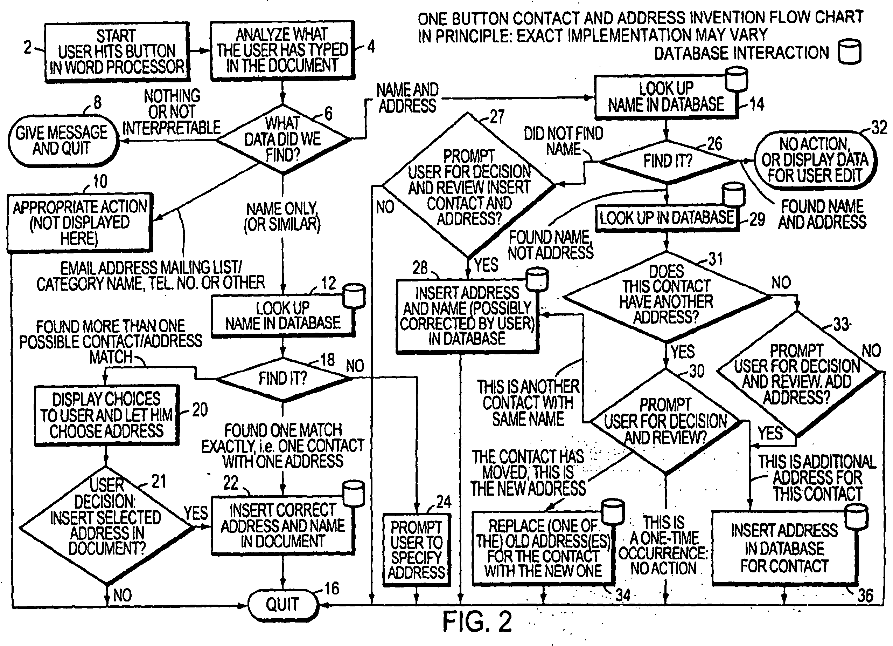

Referring now to the drawings, wherein like reference numerals designate identical or corresponding parts throughout the several views, and more particularly to figures 1 and 2 thereof, there is illustrated flow charts of single button addressing, according to exemplary embodiments of the present invention.

In figure 1, after the user has inserted the address in the word processor, the user commands the button at step 2 and the program analyzes what the user has typed in the document at step 4. At step 6, the program decides what was found in the document and if the program found nothing in the document or what it found was un-interpretable the program goes to step 8 and outputs an appropriate message to the user and then quits at step 16. The program analyzes what the user has typed in the document at step 4, for example, by analyzing (i) paragraph/line separations/formatting, etc., (ii) street, avenue, drive, lane, boulevard, city, state, zip code, country designators and abbreviations, etc., (iii) Mr., Mrs., Sir, Frau, Herr, Madam, Madame, Jr., Sr. designators and abbreviations, etc., (iv) Inc., Ltd., P.C., L.L.C, SA, AS, AB, ASA, AG, designators and abbreviations, etc., and (v) a database of common male/female names, etc.

If the program finds an e-mail address mailing list/category name telephone number or other information, at step 10 an appropriate action is performed by the program and then the program execution quits at step 16. If the program only finds a name or initials, or the like, the program looks up the name in the database at step 12 and at step 18 the program determines what was found. If the program finds more than one possible contact/address match, at step 20 the program displays menu choices to the user to let him choose an appropriate answer. Then at step 22 the program inserts a correct address and name in the document and then at step 16 the program quits execution. If the program finds one match exactly, i.e., one contact with one address, the program inserts the correct address and name in the document at step 22 and then quits execution at step 16. If the program does not find a name in the database, at step 24 the program prompts the user to specify an address and then quits execution at step 16. If the program at step 6 finds a name and an address, at step 14 the name is looked up in the database. Then, at step 26, if no match is found, at step 28 the program inserts an address and a name which are possibly corrected by the user into the database and then quits execution at step 16. If at step 26, the name and address is found, at step 32 the program either takes no action or displays the data for the user to edit. If at step 26, the name is found but not the address, the program prompts the user for a decision at step 30. If the user decides that this another contact with a same name, the program goes to step 28. If the user decides that this is a one time occurrence, no action is taken and the program quits at step 16. If the user decides that the contact has, for example, moved and that this is a new address, at step 34 one of the old addresses for the contact is replaced with the new one and the program quits at step 16. If the user decides that this is an additional address for the contact, at step 36 the additional address is inserted into the database for that contact and execution quits at step 16.

The flowchart shown in figure 2 is similar to the flowchart in figure 1, except for some additional steps which will now be discussed. At step 6, if the program only finds a name or a similar name then the name is looked up in the database at step 12, then at step 18 if the program found more than one possible contact/address match, the program displays choices to the user to let him choose an address at step 20. Then at step 21 the user decides whether to insert the selected address into the document. If the user does not decide to select the address into the document the program quits execution at step 16. If the user decides to insert the selected address into the document, the program inserts the address and name into the document at step 22 and then quits at step 16.

If the program finds a name and address in the database at step 6, then at step 14 the program looks up the name in the database and at step 26 the program determines what it has found. If the program does not find the name at step 26, at step 27 the program prompts the user for a decision and review and whether to insert the contact and address. If the user does not decide to insert the contact address, the program quits at step 16. If the user decides to insert the contact address, at step 28 the program inserts the address and name which may be possibly corrected by the user or program in the database and then execution quits at step 16.

If at step 26 the program finds a name and not an address, then at step 29 the name is looked up in the database. Then at step 31 the program decides whether this contact has another address. If the contact does not have another address, at step 33 the program prompts the user for a decision and review and whether to add the address. If the user does not want to add the address at step 33, the program quits at step 16. If the user wants to add the address at step 33 because this is an additional address for the contact, at step 36 the address is inserted in the database for the contact and execution quits at step 16.

At step 30, if the user decides that this is another contact with a same name, then the program goes to step 28. If at step 30 the user decides that this is a one time occurrence, then the program quits at step 16. If at step 30, the user decides that the contact has, for example, moved, the program goes to step 34. If at step 30, the user decides that this is an additional address for the contact, at step 36 the program inserts the address in the database for the contact and then quits at step 16.

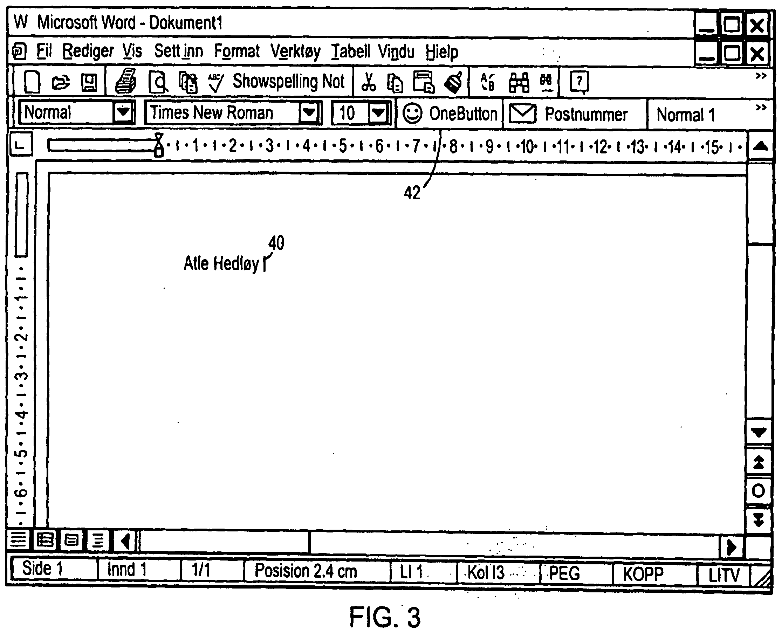

Various exemplary screen shots which are generated during execution of the program, according to the present invention, will now be described with reference to figures 3-15 and the examples as follows.

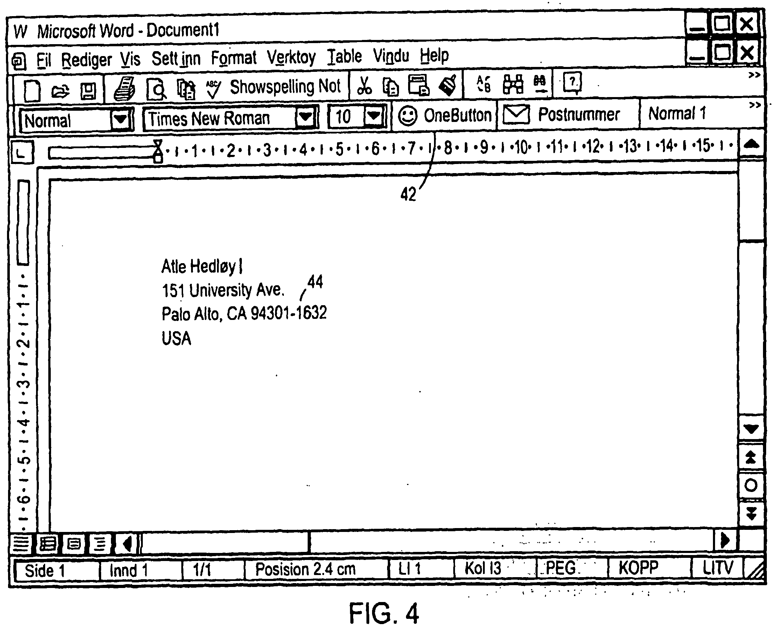

For retrieving an existing address from the database, figure 3 illustrates a starting point in a word processor document, such as a Word document, wherein the user has typed a name 40. The user hits the button 42, for example, marked "OneButton" and the program according to the present invention retrieves the name 40 from the document, searches a database for the name 40, and inserts the retrieved address 44 associated with the name 40 into the document as shown in, for example, figure 4.

The above example corresponds to steps 2, 4, 6, 12, 18, 22 and 16 in the flow charts of figures 1 and 2.

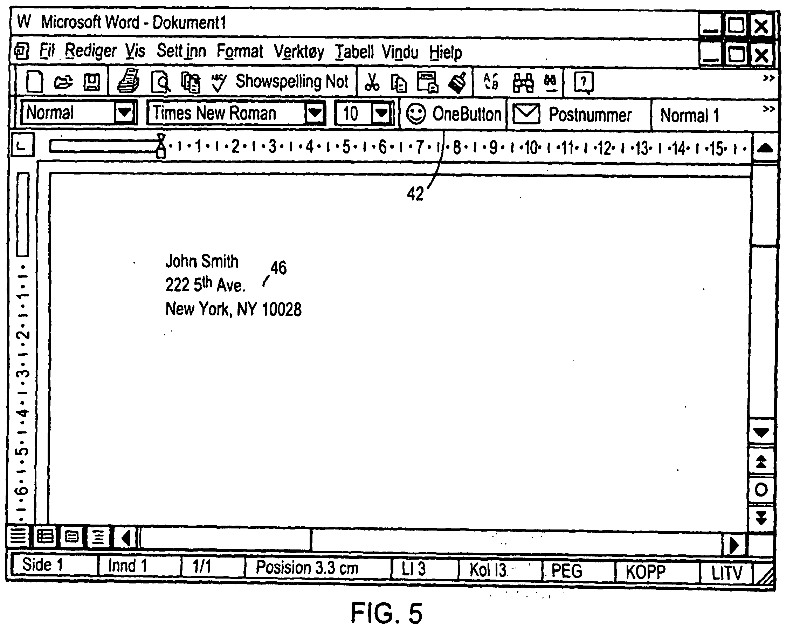

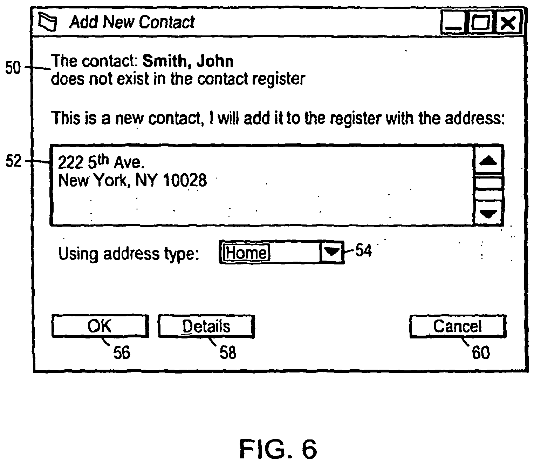

For adding a new contact to the database figure 5 illustrates a starting point in word processor document, such as a Word document, wherein the user has typed a name and address of a new contact 46. The user commands the button 42, for example, marked "OneButton," and the program according to the invention retrieves the new contact 46 from the document, searches a database for the name of the new contact 46 and generates a screen as shown in, for example, figure 6. This screen includes a message 50 informing the user that the new contact does not exist in the database, a message 52 including the address retrieved from the document, an address type selection 54, such as home, business, etc., and "OK", "Details", and "Cancel" buttons 56, 58, and 60, respectively.

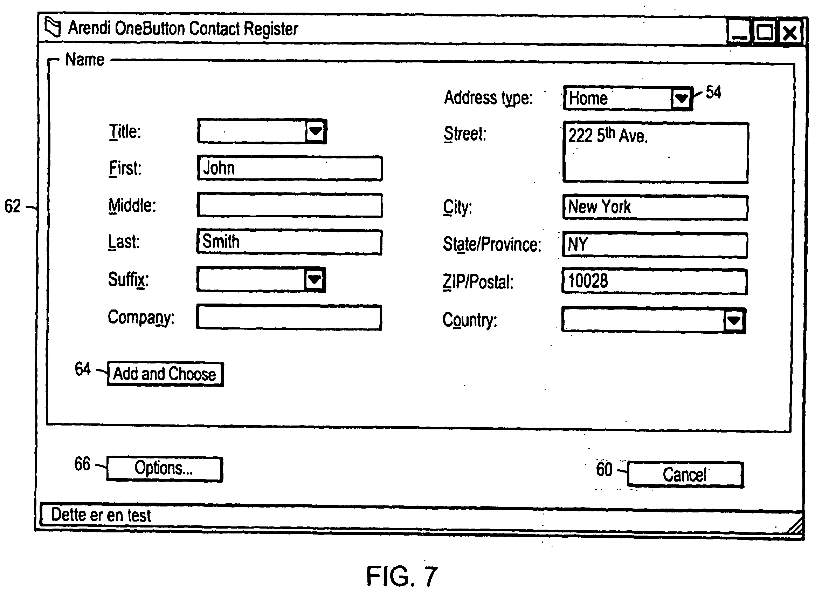

At this point, the user can cancel the operation by commanding the "Cancel" button 60, ask the program to store data in the database and return to the document by commanding the "OK" button 56, or check details before storing data into the database by commanding the "Details" button 58. If the user commands the Details button 58, as shown in, for example, figure 7, a message screen is provided so that the user can review and edit data 62 and the selection 54, store the data 62 and 54 in the database by commanding a "Add and Choose" button 64, see more options by commanding an "Options" button 66, or cancel the operation by commanding the "Cancel" button 60.

The above example corresponds to steps 2, 4, 6, 14, 26, 28 and 16 in the flow chart of figure 1 and steps 2, 4, 6, 14, 26, 27, 28 and 16 in the flow chart of figure 2.

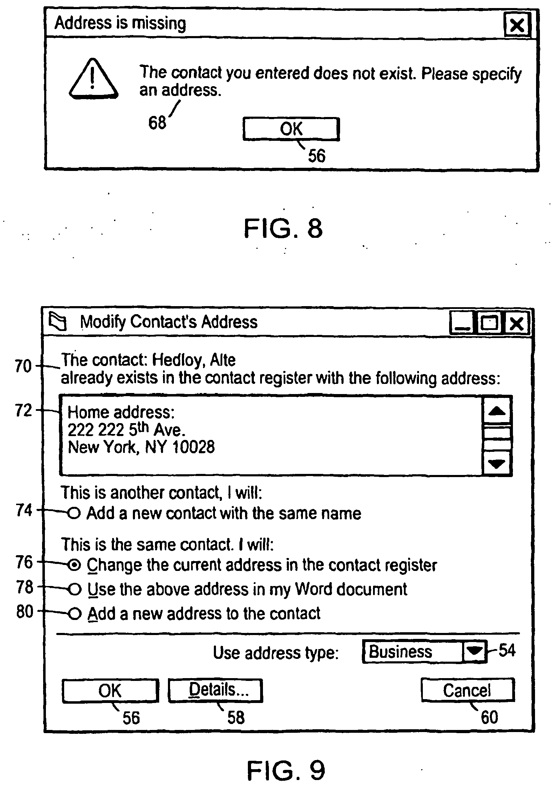

For trying to retrieve an existing address, but where contact is not in the database, figure 3 illustrates a starting point in word processor document, such as a Word document, wherein the user has typed a name of a contact 40. The user commands the button 42, for example, marked "OneButton," and the program according to the present invention retrieves the name 40 from the document, searches a database for the name of the contact 40 and generates a screen as shown in, for example, figure 8. This screen includes a message 68 informing the user that the contact does not exist in the database and to specify an address, and "OK" buttons 56. At this point when the user commands the "OK" button 56, the user returns to the document so that the contact" s address can be included as in example 2 above.

The above example corresponds to steps 2, 4, 6, 12, 18, 24 and 16 in the flow charts of figures 1 and 2.

For adding a new address for an existing contact in a short version, figure 4 illustrates a starting point in word processor document, such as a Word document, wherein the user has typed a name and new address of an existing contact 44. The user commands the button 42, for example, marked "OneButton, " and the program according to the present invention retrieves the existing contact 44 from the document, searches a database for the name of the existing contact 44 and generates a screen as shown in, for example, figure 9. This screen includes a message 70 informing the user that the contact already exits in the database with an existing address, a message 72 including the existing address, add new contact with same name selection 74, change existing address selection 76, use existing address in document selection 78, add the new address to contact selection 80, the address type selection 54, such as home, business, etc., and the "OK" "Details" and "Cancel" buttons 56, 58, and 60 respectively. At this point, the user may select one of the four options 74-80, and command the "OK" button 56 to execute the selected options. The user can also cancel the operation by commanding the "Cancel" button 60, or check details before storing data into the database by commanding the "Details" button 58.

The above example corresponds to steps 2, 4, 6, 14, 26, 28, 30, 34, 36, and 16 in the flow chart of figure 1 and steps 2, 4, 6, 14, 26, 29, 31, 30, 28, 34, 36, and 16 in the flow chart of figure 2.

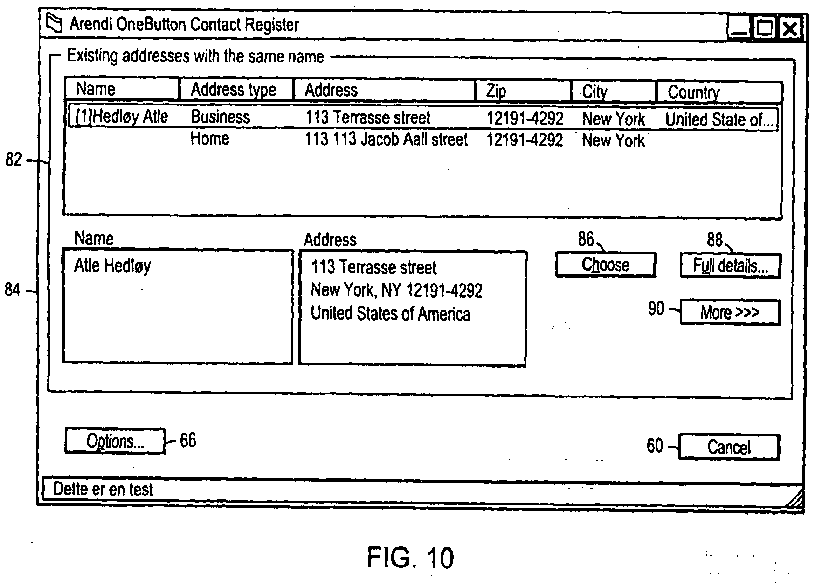

For selecting between several possible matching addresses, figure 3 illustrates a starting point in a word processor document, such as a Word document, wherein the user has typed a name and possibly address of at least one existing contact 40. The user commands the button 42, for example, marked "OneButton," and the program according to the present invention retrieves the existing contact 40 from the document, searches a database for the name of the existing contact 40 and generates a screen as shown in, for example, figure 10. This screen includes a message informing the user that the name corresponds to several addresses and possible contacts which already exist in the database, with existing contacts and addresses for selection 82, a message 84 including the full name and address for the contact that the user selects in 82, the "Options" button 66, a "Choose" button 86, a "Full details" button 88, a "More>>>" button 90, and the "Cancel" button 60. The above screen indicates to the user that at least one contact with the same name exists, and that there are more than one addresses and/or contacts that match.

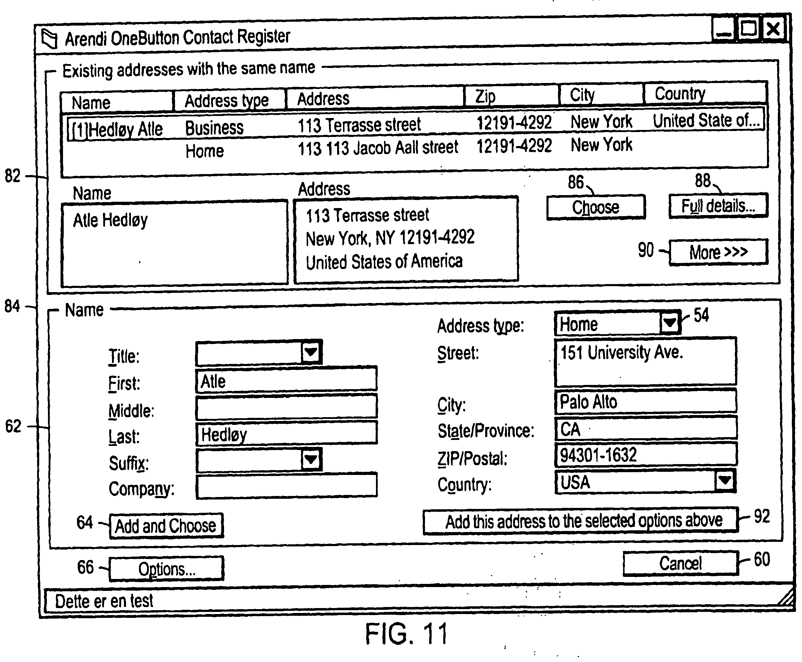

At this point, the user may command the "Choose" button 86 to use the selected address and return to the document, or the user may command the "More>>>" button 90 to view how the program interpreted what the user typed in the word processor, and possibly change this data, wherein the program generates an updated screen as shown in, for example, figure 11. The updated screen includes the data 62 which displays the name typed in the word processor as interpreted by the program, address fields, and the fields for the address type selection 54, such as home, business, etc., which may be changed by the user before the program stores it in the database, the "Add and Choose" button 64, a "<<<Less" button 90 corresponding to the "More>>>" button 90 for returning to the screen of figure 10, and an "Add this address to the selected contact above" button 92. The user might then command the "Add this address to the selected contact above" button 92 and the result in the word processor is illustrated in figure 4. The user can also cancel the operation by commanding the "Cancel" button 60, or command the "Add and Choose" button 64 to add this name and address as a new contact and address, or open the database before storing data into the database by commanding a "Full details" button 88 as will be later described.

The above example corresponds to steps 2, 4, 6, 12, 18, 20, 22, and 16 in the flow chart of figure 1 and steps 2, 4, 6, 12, 18, 20, 21, 22, and 16 in the flow chart of figure 2.

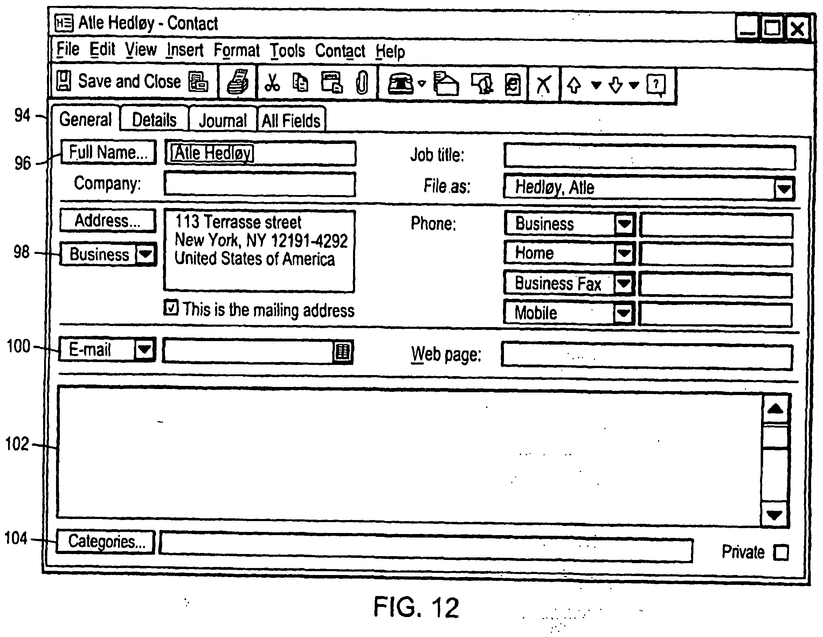

For adding a new address for an existing contact in a long version figure 4 illustrates a starting point in word processor document, such as a Word document, wherein the user has typed a name and new address of an existing contact 44. The user commands the button 42, for example, marked "OneButton," and the program according to the present invention retrieves the existing contact 44 from the document, searches a database for the name of the existing contact 44 and generates a screen as shown in, for example, figure 9. As previously described, the screen includes a message 70 informing the user that the contact already exits in the database with an existing address, and the user may command the "Details" button 58 to see the details of the new address for potentially modify the details before they are stored in the database and the program generates a screen as shown in, for example, figure 10. From this screen, the user may choose to use another address than the one he typed, and return to the document, or the user may command the "Full details" button 88 to enter a database program, such as Outlook, directly as shown in, for example, figure 12. In figure 12, the database program, such as Outlook, may include portions 94-104 for allowing the user to modify various pieces of data before they are stored in the database.

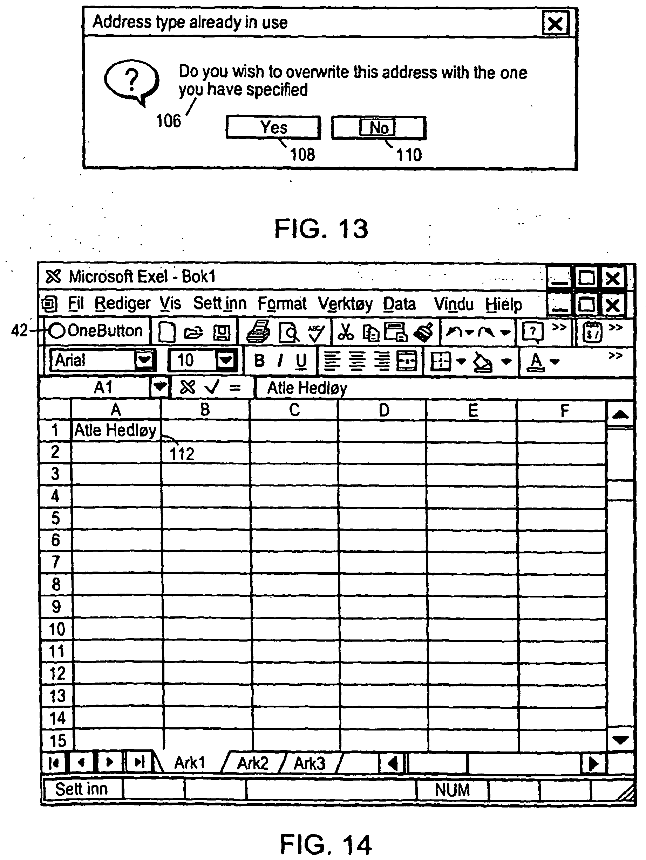

Alternatively, in the screen shown in figure 10, the user may command the "More>>>" button 90 at which time the program generates the screen as shown in, for example, figure 11 and as previously described. In this screen, the user might then command the Add this address to the selected contact above button 92. If the address typed is already in use, the program generates a screen including a message 106, and "Yes" and "No" buttons, 108 and 110, respectively, as shown in, for example, figure 13. If the user hits the "Yes" button 108 the program overwrites the contact address with the address specified by the user (e.g., if the contact has moved) and the result in the word processor is shown in, for example, figure 4.

The above example corresponds to steps 2, 4, 6, 12, 14, 26, 28, 30, 34, 36, and 16 in the flow chart of figure 1 and steps 2, 4, 6, 12, 14, 26, 29, 31, 30, 28, 34, 36, and 16 in the flow chart of figure 2.

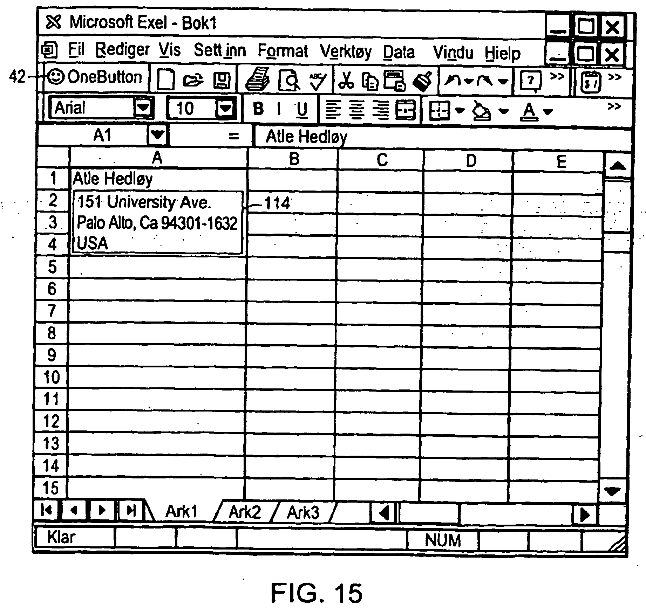

For a spreadsheet application figure 14 illustrates a starting point in word processor document, such as an Excel spreadsheet, wherein the user has typed a name 112. The user hits the button 42, for example, marked "OneButton," and the program according to the present invention retrieves the name 112 from the spreadsheet, searches a database for the name 112, and inserts the retrieved address 114 into the spreadsheet as shown in, for example, figure 15. Accordingly, the above examples apply not only to word processor documents, such as Word documents, etc., but to other word processor documents, and spread sheets, such as Excel spreadsheets, etc.

The above example corresponds to steps 2, 4, 6, 12, 18, 22 and 16 in the flow charts of figures 1 and 2.

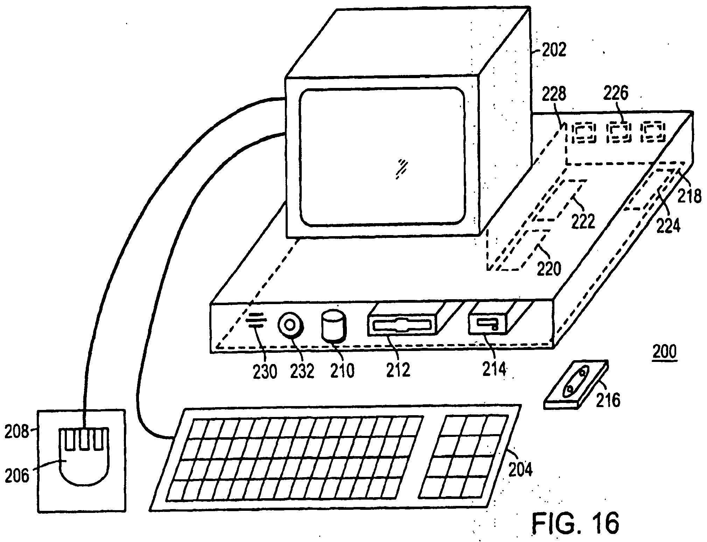

Figure 16 is a schematic illustration of a computer system for implementing the single button addressing according to the present invention. A computer 200 implements the method of the present invention, wherein the computer includes, for example, a display device 202, such as a conventional display device or a touch screen monitor with a touch-screen interface, etc., a keyboard 204, a pointing device 206, a mouse pad or digitizing pad 208, a hard disk 210, or other fixed, high density media drives, connected using an appropriate device bus (e.g., a SCSI bus, an Enhanced IDE bus, an Ultra DMA bus, a PCI bus, etc.), a floppy drive 212, a tape or CD ROM drive 214 with tape or CD media 216, or other removable media devices, such as magneto-optical media, etc., and a mother board 218. The mother board 218 includes, for example, a processor 220, a RAM 222, and a ROM 224 (e.g., DRAM, ROM, EPROM, EEPROM, SRAM, SDRAM, and flash RAM, etc.), I/O ports 226 which may be used to couple to external devices, networks, etc., (not shown), and optional special purpose logic devices (e.g., ASICs) or configurable logic devices (e.g., GAL and re-programmable FPGA) 228 for performing specialized hardware/software functions, such as sound processing, image processing, signal processing, neural network processing, object character recognition (OCR) processing, etc., a microphone 230, and a speaker or speakers 232.

As stated above, the system includes at least one computer readable medium, or alternatively, the computer readable medium may be accessed through various paths, such as networks, internet, drives, etc. Examples of computer readable media are compact discs, hard disks, floppy disks, tape, magneto-optical disks, PROMs (EPROM, EEPROM, flash EPROM), DRAM, SRAM, SDRAM, etc. Stored on any one or on a combination of computer readable media, the present invention includes software for controlling both the hardware of the computer 200 and for enabling the computer 200 to interact with a human user. Such software may include, but is not limited to, device drivers, operating systems and user applications, such as development tools. Such computer readable media further includes the computer program product of the present invention for performing any of the processes according to the present invention, described above (see, e.g., figures 1-15). The computer code devices of the present invention can be any interpreted or executable code mechanism, including but not limited to scripts, interpreters, dynamic link libraries, Java classes, and complete executable programs, etc.

The invention may also be implemented by the preparation of application specific integrated circuits or by interconnecting an appropriate network of conventional component circuits, as will be readily apparent to those skilled in the art.

Address handling, according to this invention, is a significant simplification relative to existing methods, and requires little or no training on the part of a user, as correct addresses are retrieved with a minimal number of user commands, "clicks", keystrokes, etc. In addition, a program according to the present invention, can be programmed and created in most existing programming languages and be connected to most modern word processors. Therefore, according to the present invention, the process of creating and updating records in an address database is significantly simplified, since this may now be performed directly from the word processor.

Although the present invention is defined in terms of word processing documents, such as Word documents and Excel spreadsheets, the present invention is applicable to all types of word processing documents, such as Notepad, Wordpad, WordPerfect, Quatropro, Amipro, etc., as will be readily apparent to those skilled in the art.

Although the present invention is defined in terms of information management or database programs, such as Outlook, etc., the present invention is applicable to all types of information management or database programs, such as Access, Oracle, dBase, rBase, Cardfile, including "flat files", etc., as will be readily apparent to those skilled in the art.

Although the present invention is defined in terms of providing an input device, such as a button 42 in a word processor for address handling therein, the present invention may be practised with all types of input devices, such as a touch screen, keyboard button, icon, menu, voice command device, etc., as will be readily apparent to those skilled in the art.

Although the present invention is defined in terms of a program retrieving information from a document before searching a database, the user may select the information in the document to be searched by the program in the database (e.g., by highlighting, selecting, italicizing, underlining, etc.), as will be readily apparent to those skilled in the art.

Although the present invention is defined in terms of a program retrieving a name or portion thereof from a document before searching a database, the program may retrieve an address or portion thereof from the document before searching the database and insert, correct, complete, etc., the retrieved address based on the information found in the database corresponding to the retrieved address or portion thereof, as will be readily apparent to those skilled in the art.

Furthermore the number of names or addresses found with each new character typed may be displayed on the screen during typing, starting with the first character typed, the user thereby at any time having the possibility to display on the screen the names or addresses found for further analysis before selecting. In this way the user may decide how many characters be typed before transfer to the screen and also to a certain degree capture names or addresses typed misspelled by the user or stored misspelled.

The user may decide by a corresponding command button whether the search should be limited to the first word only or to any single word in a name or an address, such as selecting "High Noon Adventure" by typing only "High", "High Noon" or "High Noon Adventure", or optionally also by typing "Noon" or "Adventure".

## Claims

1. Method of providing a function item within a word processor, tied to a user operation in said word processor, said user operation initiating retrieval of a name, address and/or other person or company related information from outside said word processor, comprising a single activation of said function item leading to an analysis of what a user has previously typed in said document to identify only a name and/or address, being used as search terms, wherein said analysis determines whether the analyzed text represents a name and/or address or not, wherein said analysis is performed by a computer program, and, after the analysis, to a search, using said search terms, in a database or file containing the name, address and/or other person or company related information available on or through the computer, and to a display of said retrieved information found in said database or said file.

2. A method according to claim 1, wherein said function item is tied to a word processor selected from a group consisting of a word processing application and a spreadsheet.

3. A method according to claim 1 or 2, wherein said database or said file is selected from a class consisting of a database program, a personal contact manager program, a spreadsheet program, and a word processing program.

4. A method according to any one of the preceding claims, wherein said function item is selected from a group consisting of a touch screen, a keyboard button, an icon, a menu choice, a mouse button, and a voice command device.

5. A method according to claim 4, wherein said activation of a menu choice further comprises the action of selecting and opening the menu.

6. A method according to any one of the preceding claims, further comprising the step of performing an operation with one or both of said search terms and said information found in said database or said file.

7. A method according to any one of the preceding claims, wherein, when said database or said file includes said found information associated with said search terms, performing the further step of displaying said found information in the word processor.

8. A method according to any one of the preceding claims, further comprising the step selected from the list of: storing all or part of said search terms in said database or said file; storing, in response to no information being found using said search terms, all or part of said search terms in said database or said file.

9. A method according to any one of the preceding claims, further comprising the step selected from a group consisting of: substituting all or part of said search terms for all or part of said found information in said document; correcting said search term in said document based on said second information; changing all or part of said search terms in said document for all or part of said found information.

10. A method according to any one of the preceding claims, further comprising the step of inserting the all or part of said found information in said document.

11. A method according to any one of the preceding claims, further comprising the step of performing an operation selected from a group consisting of sending an electronic mail message, a telex, a facsimile and a letter addressed to the name contained in said search terms.

12. A method according to any one of the preceding claims, wherein said search terms comprise a mailing list name.

13. A method according to any one of the preceding claims, wherein said step of analyzing comprises interpretation of said document where the interpretation includes at least one of the set of: looking for specific words, abbreviations, phrases of character combinations, syntactic interpretation; and looking for specific formatting features.

14. A computer program, comprising code means adapted to perform all the steps of any one of claims 1 to 13 when run on a computer.

15. A computer readable medium storing a computer program according to claim 14.

## Patentansprüche

1. Verfahren zum Bereitstellen eines Funktionselements innerhalb eines Wortprozessors, das mit einer Benutzeroperation in dem Wortprozessor verknüpft ist, wobei die Benutzeroperation ein Wiederauffinden eines Namens, einer Adresse und/oder einer anderen personen- oder unternehmensbezogenen Information von einer Stelle außerhalb des Wortprozessors einleitet, umfassend eine einzelne Aktivierung des Funktionselements, die zu einer Analyse dessen führt, was ein Benutzer zuvor in das Dokument maschinengeschrieben hat, zur Identifizierung von nur eines Namens und/oder einer Adresse, die als Suchbegriffe verwendet werden, wobei die Analyse bestimmt, ob der analysierte Text einen Namen und/oder Adresse darstellt oder nicht, wobei die Analyse von einem Computerprogramm durchgeführt wird, und, nach der Analyse, zu einem Suchvorgang unter Verwendung der Suchbegriffe in einer Datenbank oder Datei, die den Namen, Adresse, und/oder eine andere personen- oder unternehmensbezogenen Information enthält, die auf oder durch den Computer verfügbar ist, und zu einer Anzeige der erhaltenen Information, die in der Datenbank oder der Datei aufgefundenen wird.

2. Verfahren nach Anspruch 1, wobei das Funktionselement verknüpft ist mit einem Wortprozessor ausgewählt aus einer Gruppe bestehend aus einer Textverarbeitungsanwendung und einem Spreadsheet.

3. Verfahren nach Anspruch 1 oder 2, wobei die Datenbank oder die Datei ausgewählt ist aus einer Klasse bestehend aus einem Datenbankprogramm, einem persönlichen Kontaktverwaltungsprogramm, einem Spreadsheet-Programm, und einem Textverarbeitungsprogramm.

4. Verfahren nach einem der vorgenannten Ansprüche, wobei das Funktionselement ausgewählt ist aus einer Gruppe bestehend aus einem berührungsempfindlichen Bildschirm, einer Tastaturtaste, einem Icon, einer Menüauswahl, einer Maustaste, und einer Sprachbefehlseinrichtung.

5. Verfahren nach Anspruch 4, wobei die Aktivierung einer Menüauswahl des weiteren umfasst die Aktion des Auswählens und Öffnens des Menüs.

6. Verfahren nach einem der vorgenannten Ansprüche, des weiteren umfassend den Schritt des Durchführens einer Operation mit den Suchbegriffen oder der in der Datenbank oder der Datei aufgefundenen Information, oder beidem.

7. Verfahren nach einem der vorgenannten Ansprüche, wobei dann, wenn die Datenbank oder die Datei die mit den Suchbegriffen in Verbindung stehende aufgefundene Information enthalt, der weitere Schritt des Anzeigens der aufgefundenen Information in dem Wortprozessor durchgeführt wird.

8. Verfahren nach einem der vorgenannten Ansprüche, des weiteren umfassend den Schritt ausgewählt aus der Liste des:
Speicherns aller oder eines Teils der Suchbegriffe in der Datenbank oder der Datei;
Speichern aller oder eines Teils der Suchbegriffe in der Datenbank oder der Datei im Ansprechen darauf, dass keine Information unter Verwendung der Suchbegriffe aufgefunden wurde.

9. Verfahren nach einem der vorgenannten Ansprüche, des weiteren umfassend den Schritt ausgewählt aus einer Gruppe bestehend aus:
Ersetzen aller oder eines Teils der Suchbegriffe durch die Gesamtheit oder einen Teil der aufgefundenen Information in dem Dokument;
Korrigieren des Suchbegriffs in dem Dokument basierend auf der aufgefundenen Information;
Austauschen aller oder eines Teils der Suchbegriffe in dem Dokument gegen die Gesamtheit oder einen Teil der aufgefundenen Information.

10. Verfahren nach einem der vorgenannten Ansprüche, des weiteren umfassend den Schritt des Einfügens der Gesamtheit oder eines Teils der aufgefundenen Information in das Dokument.

11. Verfahren nach einem der vorgenannten Ansprüche, des weiteren umfassend den Schritt des Durchführens einer Operation ausgewählt aus einer Gruppe bestehend aus Senden einer elektronischen Mailnachricht, eines Telex, eines Faksimiles und eines Briefs, adressiert an den Namen, der in den Suchbegriffen enthaltenen ist.

12. Verfahren nach einem der vorgenannten Ansprüche, wobei die Suchbegriffe einen Adressierlistennamen aufweisen.

13. Verfahren nach einem der vorgenannten Ansprüche, wobei der Schritt des Analysierens eine Interpretation des Dokuments umfasst, wobei die Interpretation zumindest einen Bestandteil aufweist aus der Gruppe:
Suchen nach spezifischen Wörtern, Abkürzungen, Phrasen mit Zeichenkombinationen, syntaktische Interpretation; und
Suchen nach speziellen Formatierungsmerkmalen.

14. Computerprogramm mit Codemitteln ausgestaltet zum Durchführen aller Schritte eines der Patentansprüche 1 bis 13, wenn es an einem Computer ausgeführt wird.

15. Computerlesbares Medium, auf dem ein Computerprogramm nach Anspruch 14 gespeichert ist.

## Revendications

1. Procédé pour fournir un élément de fonction dans un traitement de texte, lié à l'opération d'un utilisateur dans ledit traitement de texte, ladite opération de l'utilisateur initiant la récupération d'un nom, d'une adresse et/ou d'autres informations liées à une personne ou à une société de l'extérieur dudit traitement de texte, comprenant une seule activation dudit élément de fonction menant à une analyse de ce qu'un utilisateur a précédemment tapé dans ledit document pour identifier uniquement un nom et/ou une adresse utilisés comme critères de recherche, dans lequel ladite analyse détermine si le texte analysé représente un nom et/ou une adresse ou non, dans lequel ladite analyse est effectuée par un programme d'ordinateur et, après l'analyse, à une recherche, en utilisant lesdits critères de recherche, dans une base de données ou un fichier contenant le nom, l'adresse, et/ou les autres informations liées à une personne ou à une société disponibles sur ou par l'ordinateur, et à un affichage desdites informations récupérées trouvées dans ladite base de données ou ledit fichier.

2. Procédé selon la revendication 1, dans lequel ledit élément de fonction est lié à un traitement de texte sélectionné dans un groupe composé d'une application de traitement de texte et d'un tableur.

3. Procédé selon la revendication 1 ou 2, dans lequel ladite base de données ou ledit fichier est sélectionné(e) dans une classe composée d'un programme de base de données, d'un programme de gestion de contacts personnels, d'un programme de tableur et d'un programme de traitement de texte.

4. Procédé selon l'une quelconque des revendications précédentes, dans lequel ledit élément de fonction est sélectionné dans un groupe composé d'un écran tactile, d'un bouton de clavier, d'une icône, d'une commande de menu, d'un bouton de souris et d'un dispositif de commande vocale.

5. Procédé selon la revendication 4, dans lequel ladite activation d'une commande de menu comprend en outre l'action de sélectionner et d'ouvrir le menu.

6. Procédé selon l'une quelconque des revendications précédentes, comprenant en outre l'étape consistant à exécuter une opération avec l'un ou l'un et l'autre desdits critères de recherche et desdites informations trouvées dans ladite base de données ou ledit fichier.

7. Procédé selon l'une quelconque des revendications précédentes, dans lequel, lorsque ladite base de données ou ledit fichier comprend lesdites informations trouvées associées auxdits critères de recherche, l'étape supplémentaire d'affichage desdites informations trouvées dans le traitement de texte est exécutée.

8. Procédé selon l'une quelconque des revendications précédentes, comprenant en outre l'étape sélectionnée dans la liste du stockage de l'intégralité ou d'une partie desdits critères de recherche dans ladite base de données ou ledit fichier ; du stockage, en réponse à une absence d'informations trouvées en utilisant lesdits critères de recherche, de l'intégralité ou d'une partie desdits critères de recherche dans ladite base de données ou ledit fichier.

9. Procédé selon l'une quelconque des revendications précédentes, comprenant en outre l'étape sélectionnée dans un groupe composé du remplacement de l'intégralité ou d'une partie desdits critères de recherche pour l'intégralité ou une partie desdites informations trouvées dans ledit document ; de la correction dudit critère de recherche dans ledit document en fonction desdites secondes informations ; de la modification de l'intégralité ou d'une partie desdits critères de recherche dans ledit document pour l'intégralité ou une partie desdites informations trouvées.

10. Procédé selon l'une quelconque des revendications précédentes, comprenant en outre l'étape consistant à insérer l'intégralité ou une partie desdites informations trouvées dans ledit document.

11. Procédé selon l'une quelconque des revendications précédentes, comprenant en outre l'étape consistant à exécuter une opération sélectionnée dans un groupe consistant à envoyer un message électronique, un télex, une télécopie et une lettre adressés au nom contenu dans lesdits critères de recherche.

12. Procédé selon l'une quelconque des revendications précédentes, dans lequel lesdits critères de recherche comprennent un nom de liste de messagerie.

13. Procédé selon l'une quelconque des revendications précédentes, dans lequel ladite étape d'analyse comprend l'interprétation dudit document où l'interprétation comprend au moins l'un de l'ensemble de recherche de mots spécifiques, d'abréviations, de suites de combinaisons de caractères, d'interprétation syntaxique ; et de recherche de fonctionnalités de formatage spécifiques.

14. Programme informatique, comprenant des moyens de codage adaptés pour exécuter toutes les étapes de l'une quelconque des revendications 1 à 13 une fois lancés sur un ordinateur.

15. Support lisible par ordinateur stockant un programme informatique selon la revendication 14.
